# EUROPÄISCHE PATENTANMELDUNG

(11) **EP 1 582 172 A1**
(43) Veröffentlichungstag der Anmeldung: **05.10.2005**
(21) Anmeldenummer: 04007587.1
(22) Anmeldetag: 29.03.2004
(51) Int. Cl.: A61C 5/11

(54) **Verfahren zur Herstellung einer Zahnkrone**

(71) Anmelder: Merz Dental GmbH, 24321 Lütjenburg (DE)
(72) Erfinder: Borowski, Christian, 24111 Kiel (DE)
(74) Vertreter: Glawe, Delfs, Moll

(57) **Zusammenfassung**

Die Erfindung betrifft ein Verfahren zur Herstellung einer Zahnkrone als Endversorgung. Der Rohling umfasst ein Zahnmodul (1) und eine Halterung (2'). Unterseitig wird eine Präparation angebracht, die zur Verbindung mit einem Verankerungselement (Schraubelement oder Zahnstumpf) dient. Die Erfindung sieht vor, das Zahnmodul (1) und die Halterung (2') aus demselben Material in einem ersten Prozess herzustellen, der eine hohe Oberflächengüte erlaubt. In einem zweiten Prozess werden die beiden Module (1, 2') miteinander verbunden und können dann weiterverarbeitet werden. Das erfindungsgemäße Verfahren bewirkt eine hohe Maßhaltigkeit der entstehenden Krone und erlaubt die Verwendung preisgünstigen Kunststoffmaterials für optisch hochwertigen dauerhaften Zahnersatz.

## Beschreibung

Die Erfindung betrifft ein Verfahren zur Herstellung eines genauen Verbundes zwischen einer Krone, auch mehrgliedrig und verbunden, als Provisorium oder Endversorgung und einer Maschinenanbindung, wobei die Erfindung ein Zahnmodul, ein Verbindungsmodul und eine beliebige Maschinenanbindung umfasst, die es ermöglicht eine genaue maschinengeführte Bearbeitung an dem Zahnmodul vorzunehmen.

Verfahren zur Herstellung von Zahnkronen sind aus offenkundiger Vorbenutzung bekannt. Bezüglich der Verweildauer des Zahnersatzes unterscheidet man zwei Indikationen. Eine Indikation ist die Herstellung von provisorischem Zahnersatz, der nur für eine begrenzte Zeit von wenigen Tagen bis Wochen eingesetzt wird. Die andere Indikation sind als definitiver Zahnersatz dienende Zahnkronen, die häufig Jahre oder Jahrzehnte im Munde des Patienten verweilen. Für die letztgenannte Indikation von Zahnkronen ist es besonders wichtig, dass außer der Bissfunktionalität auch ein ansprechendes optisches Äußeres des Zahns und seiner Oberfläche erreicht wird. Als Material hat sich insbesondere Keramik für als Endversorgung dienende Kronen durchgesetzt. Es verbindet bezüglich beider Funktionalitäten gute Eigenschaften. Allerdings ist Keramik als Material in seiner Bearbeitung aufwendig.

Zur Verringerung des Aufwands ist es bekannt, Kunststoffmaterial anstelle von Keramik zu verwenden. Das Kunststoffmaterial hat zwar den Vorteil, dass es wesentlich kostengünstiger ist, jedoch kann aus ihm nicht wie bei Keramikmaterial durch Fräsen eine Zahnkrone unmittelbar hergestellt werden. Die beim Fräsen erreichbare Oberflächengüte ist beim Kunststoffmaterial nicht hoch genug, um die an als Endversorgung dienende Zahnkrone gestellten Anforderungen zu erfüllen. Es ist daher vorgeschlagen worden, als Ausgangspunkt modifizierte Konfektionszähne, ähnlich wie sie für herausnehmbaren Zahnersatz verwendet werden, heranzuziehen und diese mit einer geeigneten Halterung zu versehen. Schwierigkeiten bereitet dabei das Herstellen einer maßgenauen Verbindung zwischen Zahn und Halterung.

Der Erfindung liegt die Aufgabe zugrunde, ein Verfahren der eingangs genannten Art dahingehend zu verbessern, mit weniger Aufwand eine maßgenaue Herstellung zu ermöglichen.

Die erfindungsgemäße Lösung liegt in den Merkmalen des Anspruchs 1. Vorteilhafte Weiterbildungen sind Gegenstand der abhängigen Ansprüche.

Erfindungsgemäß ist bei einem Verfahren zur Herstellung einer Zahnkrone als Endversorung, wobei die Krone ein Zahnmodul und eine Halterung umfasst, umfassend Herstellen des Zahnmoduls in einem ersten Prozess mit hoher Oberflächengüte und Ausbilden einer Präparation an einer Unterseite des Zahnmoduls vorgesehen, dass die Halterung aus demselben Material wie das Zahnmodul hergestellt wird und in einem zweiten Prozess das Zahnmodul und die Halterung zu einer Einheit verbunden werden, wobei die Ausbildung der Präparation an der Unterseite der Halterung vorgesehen ist.

Nachfolgend seien zuerst einige verwendete Begriffe erläutert:
Unter einem Zahnmodul wird der Teil eines als Zahnersatz dienenden Krone verstanden, der den Zahnkörper bildet, der zu seinem überwiegenden Teil sichtbar aus dem Zahnfleisch herausragt und an dessen Oberseite eine Bissfläche ausgebildet ist (Oberseite ist hier funktional zu verstehen und stimmt für den Fall des Unterkiefers mit den realen räumlichen Verhältnissen nach der Einsetzen überein, im Fall des Oberkiefers ist es genau umgekehrt). Das Zahnmodul dient nicht zur Verankerung im Kiefer. Dazu ist eine gesonderte Verankerung vorgesehen. Bei ihr kann es sich um eine künstliche Verankerung (Implantat) handeln, die z.B. in den Kieferknochen eingeschraubt ist, oder um einen Zahnstumpf, der über die natürliche Wurzel im Kiefer verankert ist.
Unter einer Präparation wird eine an der Unterseite (d.h. an der der Bissfläche gegenüberliegenden Seite) angeordnete Ausnehmung verstanden, die zur Befestigung der Krone für den Halt auf einem Implantat bzw. Stumpf im Kiefer dient.

Zweckmäßigerweise wird die Verbindung der Halterung im Zahnmodul an dessen Unterseite ausgeführt. Sie befindet sich damit an der Seite, die nach dem Einsetzen kieferwärts gerichtet und somit den Blicken der Betrachter entzogen ist. Eventuell verbleibende Bearbeitungsspuren stören auf diese Weise nicht den ästhetischen Eindruck. Die Verbindung zwischen Zahnmodul und Halterung ist vorteilhafterweise vollflächig. Damit steht die gesamte Unterseite zur Kraftübertragung zur Verfügung, so dass die spezifische Belastung sinkt und Lastspitzen vermieden werden. - Jedoch braucht die Verbindung der Halterung mit dem Zahnmodul nicht unbedingt an der Unterseite ausgeführt zu sein, sie kann auch über eine Seitenfläche erfolgen. Damit ergibt sich der Vorteil einer zentralen Befestigung des Zahnmoduls. Die bei der weiteren Bearbeitung auftretenden Bearbeitungskräfte wirken dann mit einem geringeren Hebelarm auf die Verbindung mit der Halterung ein. Die Verbindung wird dadurch weniger belastet.

Vorzugsweise erfolgt das Herstellen der Verbindung zwischen der Halterung und dem Zahnmodul kleberfrei. Bewährt hat es sich, die Verbindung durch Direktverbinden herzustellen. Dies ist ermöglicht, da das Zahnmodul wie auch die Halterung aus demselben Material hergestellt sind. Vorzugsweise ist die Halterung so ausgebildet, dass sie ein Zahnmodulverbindungsteil und ein als Ausleger ausgebildetes Befestigungsteil aufweist. Das Vorsehen eines Auslegers an der Halterung ermöglicht eine günstigere, schwerpunktnahe Befestigung des Zahnmoduls. Besonders zweckmäßig ist es, den Ausleger als Seitenausleger auszubilden. Dies ermöglicht es, das Zahnmodul auf Höhe des Schwerpunkts an einer Bearbeitungsvorrichtung aufzunehmen. Außerdem ergibt sich damit ein recht kurzer Hebelarm zwischen dem Zahnmodul und der Aufnahme an der Bearbeitungsmaschine. Die aufgrund der Elastizität des verwendeten Materials unvermeidlichen Auslenkungen des Zahnmoduls bei der Bearbeitung werden damit minimiert. Dazu ist das Befestigungsteil vorzugsweise so ausgebildet, dass es mindestens den auftretenden Bearbeitungskräften standhält.

Bei einem bewährten Ausführungsteil ist an dem Befestigungsteil ein keilförmiger Fuß ausgebildet. Die Keilform verbindet den Vorzug einer großen Befestigungsfläche mit dem Vorteil einer möglichst guten Zugänglichkeit des Zahnmoduls. Zudem bietet sie einen sicheren Halt, da die Materialstärke in Zonen steigender Belastung erhöht ist. Sie ist damit eine einerseits sehr belastungsfeste und andererseits für einen guten Zugang förderliche Befestigungsweise.

Vorzugsweise handelt es sich bei dem Zahnmodul um ein Modul für Front- und Seitenzähne. Frontzähne unterscheiden sich von den Seitenzähnen in zweierlei Hinsicht. Zum einen nehmen sie eine andere Funktion wahr, nämlich Schneiden der Speisen anstatt Zermahlen, und zum anderen sind sie die am besten sichtbarsten Zähne. Ihr ästhetischer Eindruck ist damit von außerordentlicher Bedeutung. Damit sie ein möglichst natürliches Aussehen haben, müssen sie eine hohe Oberflächenqualität aufweisen. Anders als bei herkömmlichen Fräsverfahren ermöglicht es das erfindungsgemäße Herstellungsverfahren, auch bei einem aus Kunststoffmaterial hergestellten Frontzahnmodul eine hohe Oberflächengüte zu erreichen. Der gewünschte ästhetische Eindruck kann damit erreicht werden. Damit ermöglicht es die Erfindung, preisgünstigeres Kunststoffmaterial zur Herstellung von Kronen sowohl im Front- als auch im Seitenzahnbereich zu verwenden.

Die Erfindung wird nachfolgend beispielhaft unter Bezugnahme auf die Zeichnung erläutert, in der eine vorteilhafte Ausführungsform dargestellt ist.

Es zeigen:
- Fig. 1: ein als Frontzahn ausgebildetes Zahnmodul;
- Fig. 2: eine zur Verbindung mit dem Zahnmodul vorgesehene Halterung gemäß einem ersten Ausführungsbeispiel;
- Fig. 3: Zahnmodul und Halterung im verbundenen Zustand;

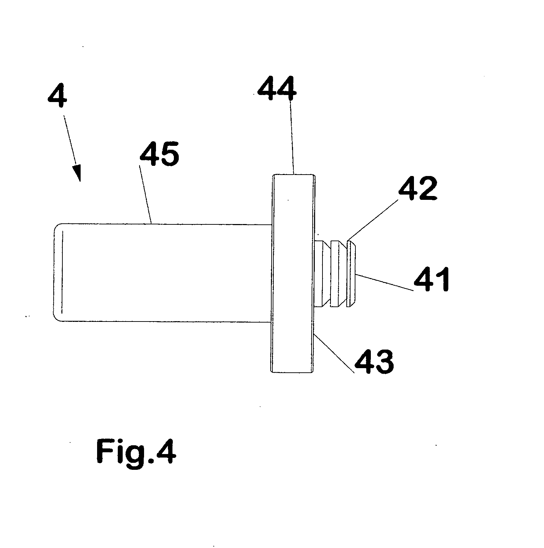

- Fig. 4: ein Maschinenadapter zur Aufnahme in der Halterung;

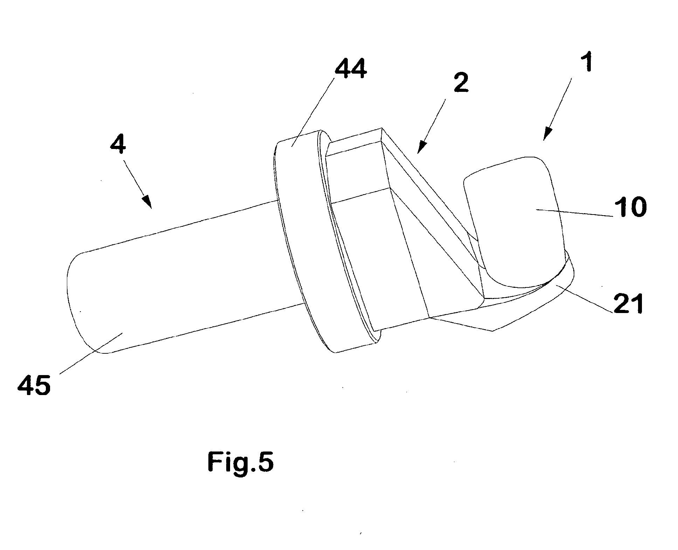

- Fig. 5: eine perspektivische Ansicht des Zahnmoduls gemäß Fig. 3 mit angesetztem Maschinenadapter; und
- Fig. 6: eine Halterung gemäß einem zweiten Ausführungsbeispiel der Erfindung im verbundenen Zustand mit dem Zahnmodul; und

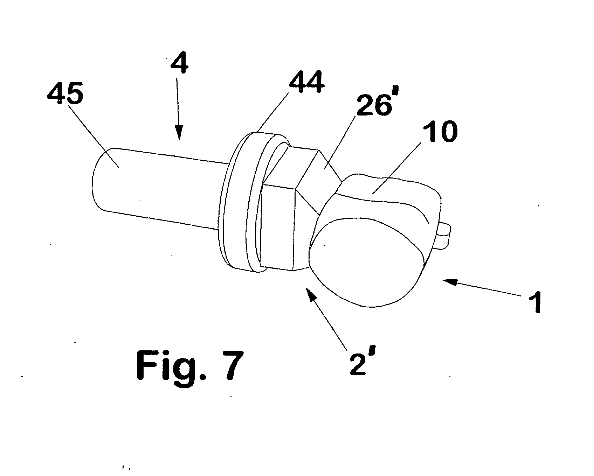

- Fig. 7: eine perspektivische Ansicht des Implantats gemäß Fig. 6 mit angesetztem Maschinenadapter.

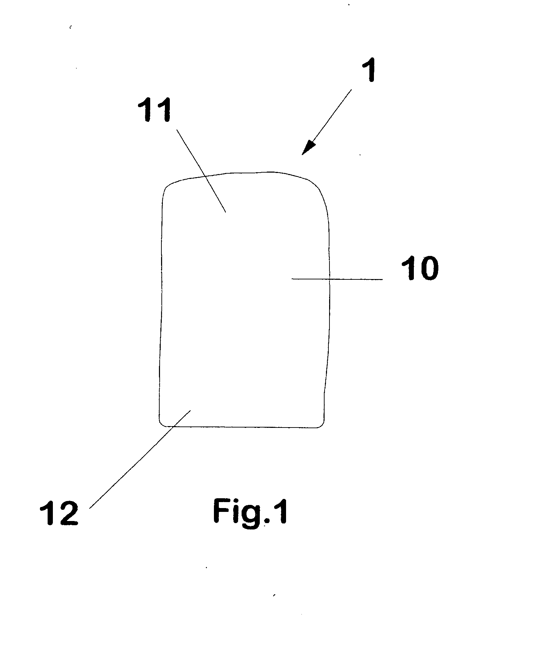

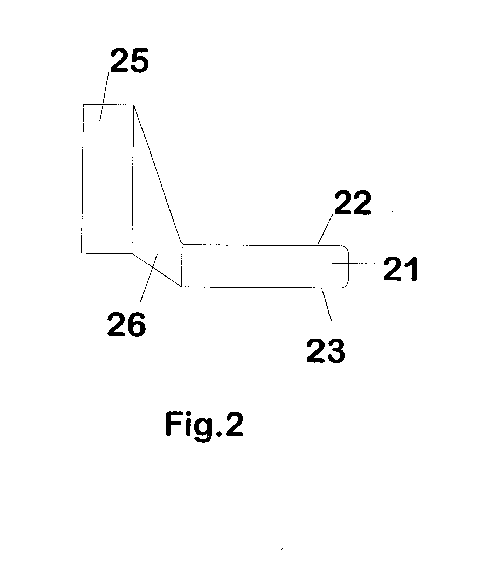

In den Fig. 1 und 2 sind die Module für das erfindungsgemäße Herstellungsverfahren dargestellt. In Fig. 1 ist ein Frontzahnmodul 1 dargestellt. Es umfasst einen Zahnkörper 10 mit einer (in der Zeichnung oben liegenden) Biss- oder Schneidfläche 11. An der gegenüberliegenden (in der Zeichnung unteren) Seite ist eine als Unterseite bezeichnete Verbindungsfläche vorgesehen. Der Zahn besteht aus einem Kunststoffmaterial wie z.B. PMMA (Polymethylmethacrylat). Es kann sich dabei insbesondere um einen auf bekannte Weise hergestellten Konfektionszahn handeln, wie er für Zahnprothesen verwendet wird. Die Unterseite 12 ist vorzugsweise eben. Diese dienen dazu, den Übergang zu dem anschließenden Modul zumindest teilweise zu verblenden. Der Zahnkörper 10 kann einen geschichteten Aufbau aufweisen, wobei Schattierungsschichten eingebracht sind, um einen möglichst natürlich aussehenden Ausdruck zu erreichen. Dies gilt insbesondere für den Bereich der als Schneidkante ausgebildeten Bissfläche 11.

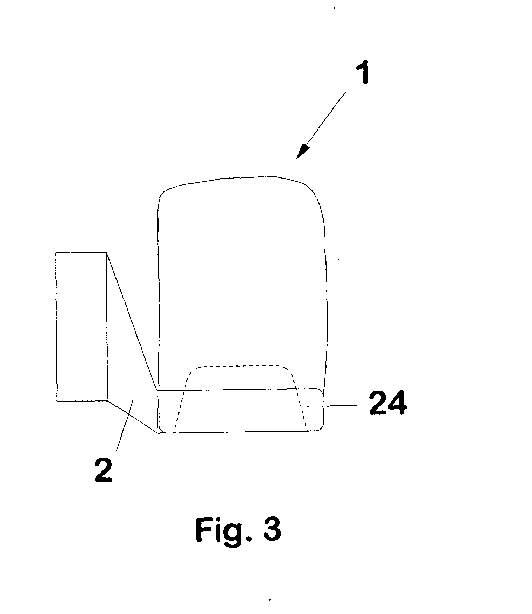

In Fig. 2 ist die Halterung dargestellt, die in ihrer Gesamtheit mit der Bezugsziffer 2 bezeichnet ist. Sie umfasst ein Verbindungsteil 21 mit einer zur Verbindung mit dem Frontzahnmodul 1 vorgesehenen Oberseite 22, einem Fuß 26 und einen Flansch 25. Der Fuß 26 erstreckt sich von dem plättchenartig ausgebildeten Verbindungsteil 21 nach schräg oben in einen Bereich oberhalb der Oberseite 22, wobei der Raum unmittelbar über der Oberseite 22 zur Aufnahme des Frontzahnmoduls 1 frei bleibt. Der Fuß 26 ist keilförmig ausgebildet mit einem schmalen ersten Querschnitt im Bereich des Übergangs zum Verbindungsteil 21 und einem wesentlich breiteren, im dargestellten Ausführungsbeispiel, ist der Querschnitt im Bereich des Übergangs zum Befestigungsflansch 25 etwa viermal so stark. Diese keilförmige Gestaltung hat den Effekt, dass zwischen dem Fuß 26 und dem Frontzahnmodul 1 im aufgesetzten Zustand ein sich von der Oberseite 22 nach oben hin weitender Spalt bildet (siehe Fig. 3). Dieser Spalt ermöglicht eine gute Zugänglichkeit des Frontzahnmoduls für nachfolgende Bearbeitungsschritte.

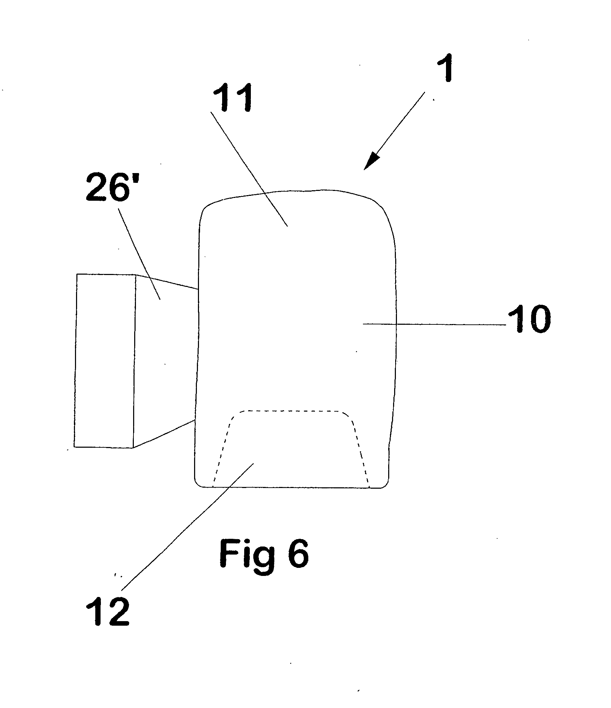

Eine alternative Ausführungsform für die Halterung ist in Fig. 6 dargestellt und in ihrer Gesamtheit mit der Bezugsziffer 2' bezeichnet. Ihr Aufbau ist im Wesentlichen ähnlich zu der Halterung 2 gemäß dem ersten Ausführungsbeispiel. Nachfolgend werden nur die Unterschiede kurz vorgestellt.

Die Halterung 2' weist einen Fuß 26' auf, der abweichend ausgebildet ist. Er ist so gestaltet, dass er das Frontzahnmodul 1 im aufgesetzten Zustand an dessen distaler Seite kontaktiert. Das Frontzahnmodul 1 ist damit in einem zentralen Bereich gehalten, so dass sich bei der Bearbeitung auf Grund kurzer Hebelwege nur geringe Drehmomente ausbilden können. Der Gefahr einer Lockerung oder gar Lösung der Verbindung zwischen dem Frontzahnmodul 1 und der Halterung 2' wird damit entgegen gewirkt. Weiter hat dieses Ausführungsbeispiel den Vorteil, dass eine besonders gute Zugänglichkeit der Unterseite 12 erreicht wird. Die weitere Bearbeitung vereinfacht sich dadurch.

Die weiteren Erläuterungen orientieren sich an dem ersten Ausführungsbeispiel. Für das zweite Ausführungsbeispiel gelten sie sinngemäß. An der dem Fuß 26 gegenüberliegenden Seite des Befestigungsflansches 25 ist eine Aufnahmefläche für einen Maschinenadapter 4 vorgesehen. Diese Aufnahmefläche ist im wesentlichen plan. Die plane Aufnahmefläche dient zur winkelrichtigen Anlage der Halterung 2 an dem Maschinenadapter 4.

Bei einer beliebigen Maschinenanbindung 45 muss im gegenüberliegenden Teil eine entsprechende Anlagefläche 43 und ein Befestigungszapfen 41 mit ausgebildeten Nuten 42 angebracht sein.

Die Herstellung erfolgt auf folgende Weise. Zuerst wird in einem ersten Prozess das Frontzahnmodul 1 hergestellt. Bei diesem Prozess, der aus der Herstellung von Konfektionszähnen für Zahnprothesen bekannt ist und daher hier nicht näher beschrieben zu werden braucht, wird das Zahnmodul 1 aus Kunststoffmaterial hergestellt. Dieser Prozess ermöglicht die Erzeugung einer besonders hohen Oberflächengüte, die dem Zahnmodul 1 ein natürlich wirkendes Aussehen verleiht.

Dieses Zahnmodul 1 kann nicht direkt als Krone verwendet werden sondern es muss noch mit einer Halterung versehen werden, welche eine Präparation zur Aufnahme eines Verankerungselements zur Befestigung des Zahnmoduls im Kiefer erhält. Um die natürlich wirkende Oberfläche des Zahnmoduls 1 nicht zu beschädigen, kann die Präparation nicht unmittelbar an dem Zahnmodul 1 vorgenommen werden, sondern das Zahnmodul 1 muss mittels einer Halterung 2 an der Bearbeitungsmaschine angeordnet werden. Dazu wird die vorzugsweise aus demselben Kunststoffmaterial wie das Zahnmodul 1 hergestellte Halterung 2 erfindungsgemäß mit dem Zahnmodul 1 verbunden.

Grundsätzlich wäre es zwar möglich, das Zahnmodul 1 und die Halterung 2 in einem Prozessschritt aus demselben Material en bloc herzustellen. Dies bringt jedoch den Nachteil mit sich, dass aufgrund von unvermeidlicher Schwindung des Kunststoffmaterials eine nur geringe Maßhaltigkeit erzielt werden könnte. Deshalb sieht die Erfindung vor, das Zahnmodul 1 und die Halterung 2 gesondert aus demselben Material herzustellen und diese beiden Module dann nachfolgend zu verbinden.

Zur Verbindung des Zahnmoduls 1 mit der Halterung 2 wird eine kleberfreie Verbindungstechnik verwendet. Dies kann insbesondere durch eine Verbindungen geschehen, indem die aneinander zu fügenden Verbindungsflächen, nämlich die Unterseite 11 des Zahnmoduls 1 und die Oberseite 22 der Halterung 2, mit dem gleichen Material durch einen chemischthermoplastischen Prozess verbunden werden. Dadurch ergibt sich eine innige Verbindung, die in ihrem Erscheinungsbild einer nahtlosen Verbindung gleichkommt. Mit dieser in einem zweiten Herstellungsschritt erfolgten Verbindung ist die Herstellung des Rohlings für die Krone abgeschlossen. Dies kann serienmäßig erfolgen und die Rohlinge können gelagert werden.

Zur Vorbereitung des Einsetzens muss der Rohling noch angepasst werden und dazu mit der Präparation (Aufnahme für das im Kiefer befestigte Verankerungselement = Implantat oder Zahnstumpf) an der Unterseite versehen werden. Dies geschieht vorzugsweise durch maschinelle Bearbeitung. Nach dem Einsetzen in die Bearbeitungsmaschine, insbesondere einer rechnergesteuerten Fräse, können die zum Einsetzen erforderlichen Arbeiten vorgenommen werden. An der Unterseite 23 der Halterung 2 wird die Präparation (siehe gestrichelte Linie 24 in Fig. 3) hergestellt. Dank der mit dem Zahnmodul 1 innig verbundenen Halterung 2, 2', die wiederum fest auf dem Maschinenadapter 4 sitzt, ist dabei eine hohe Positionierungsgenauigkeit und damit gute Maßhaltigkeit gewährleistet. Wenn dies abgeschlossen ist, so braucht nur noch der Fuß 26, 26' an seiner Übergangsstelle zur Halterungsplatte 21 abgetrennt zu werden. Damit dies leicht gelingt, ist der Übergang vom Querschnitt her so klein wie möglich gewählt. Er muss allerdings so gestaltet sein, dass er den auftretenden Bearbeitungskräften standhält. Nach der Durchtrennung in diesem Bereich ist der so geschaffene Zahnersatz fertig zum Einsetzen. Manuelle Nacharbeiten sind nicht mehr oder nur im geringen Maß erforderlich.

## Patentansprüche

1. Verfahren zur Herstellung einer Zahnkrone als Endversorgung, wobei der Rohling ein Zahnmodul (1) und eine Halterung (2) umfasst, umfassend Herstellen des Zahnmoduls (1) in einem ersten Prozess mit hoher Oberflächengüte und Ausbilden einer Präparation an einer Unterseite des Zahnmoduls (1),
**gekennzeichnet durch**,
Herstellen der Halterung (2, 2') aus demselben Material wie das Zahnmodul (1) und Zusammenfügen des Zahnmoduls (1) und der Halterung (2, 2') zu einer Einheit in einem zweiten Prozess, wobei die Ausbildung der Präparation an der Unterseite der Halterung (2) vorgesehen ist.

2. Herstellungsverfahren nach Anspruch 1,
**gekennzeichnet dadurch, dass**
die Halterung (2, 2') mit dem Zahnmodul (1) an dessen Unterseite (12) verbunden wird.

3. Herstellungsverfahren nach Anspruch 1 oder 2,
**gekennzeichnet dadurch, dass**
die Halterung (2, 2') und das Zahnmodul (1) vollflächig verbunden sind.

4. Herstellungsverfahren nach Anspruch 3,
**gekennzeichnet durch**,
Ausbilden der Halterung (2, 2') mit einem Zahnmodulverbindungsteil (21) und einem als Ausleger, vorzugsweise als Seitenausleger, ausgebildeten Befestigungsteil (26).

5. Herstellungsverfahren nach Anspruch 4 oder 5,
**dadurch gekennzeichnet dass**,
das Befestigungsteil (26) zur Aufnahme der bei maschineller Bearbeitung auftretenden Kräfte so ausgebildet ist, dass es sich mindestens in geeigneter Weise über die Höhe des Zahnmoduls (1) erstreckt.

6. Herstellungsverfahren nach einem der Ansprüche 3 bis 5,
**gekennzeichnet durch**,
Ausbilden des Befestigungsteils (26).

7. Herstellungsverfahren nach einem der Ansprüche 1 bis 6,
**dadurch gekennzeichnet, dass**
die Zahnkrone mehrteilig und verbunden ausgeführt ist.

8. Herstellungsverfahren nach einem der Ansprüche 1 bis 7,
**gekennzeichnet durch**,
Verwenden eines Frontzahnmoduls (1) als Zahnmodul.
